# EUROPÄISCHE PATENTSCHRIFT

(11) **EP 0 897 826 B1**
(45) Veröffentlichungstag und Bekanntmachung des Hinweises auf die Patenterteilung: **06.09.2017**
(21) Anmeldenummer: 98890205.2
(22) Anmeldetag: 15.07.1998
(51) Int. Cl.: B60M 1/28

(54) **Maschine zum Verlegen eines Fahrdrahtes**
Catenary wire stringing device
Machine d'installation de ligne caténaire

(30) Priorität: 21.08.1997 AT 140697
(43) Veröffentlichungstag der Anmeldung: 24.02.1999
(73) Patentinhaber: Plasser & Theurer Export von Bahnbaumaschinen Gesellschaft m.b.H., 1010 Wien (AT)
(72) Erfinder: Theurer, Josef, 1010 Wien (AT); Gruber, Leopold Rudolf, 3270 Scheibbs (AT)

(56) Entgegenhaltungen:
- EP-A- 0 776 780
- DE-A- 2 012 248
- US-A- 4 213 596

## Beschreibung

Die Erfindung betrifft eine Maschine zum Verlegen eines Fahrdrahtes und/oder eines Tragseiles einer Oberleitung eines Gleises, mit einem auf Schienenfahrwerken abgestützten Maschinenrahmen, auf dem eine - aufgewickelten Fahrdraht bzw. Tragseil beinhaltende - Drahttrommel und eine Führungseinrichtung mit einer an einem oberen Ende eines Tragmastes angeordneten, über einen Antrieb höhenverstellbaren Führungsrolle zur Führung des von der Drahttrommel abgewickelten Fahrdrahtes bzw. Tragseiles gelagert sind, wobei die Führungseinrichtung anhand eines Schwenkantriebes um eine in Maschinenlängsrichtung verlaufende Achse verschwenkbar gelagert ist.

Aus der EP 0 776 780 A1 ist bereits eine derartige Maschine bekannt, mit der ein Fahrdraht oder ein Tragseil einer Gleisoberleitung in einem einzigen Arbeitsgang mit der endgültigen Zugspannung verlegt werden kann. Der Draht wird dabei kontinuierlich von einer Drahttrommel abgezogen und durchläuft eine Zugspannungsvorrichtung, bevor er anhand einer Führungseinrichtung in der korrekten Höhen- und Seitenlage für die Endmontage positioniert wird. Die Führungseinrichtung besteht aus einem mittels eines Antriebes teleskopisch verlängerbaren Tragmast, an dessen oberem Ende eine mit einer Nut versehene, frei rotierbare Führungsrolle angeordnet ist. Der Tragmast und die Drahttrommel sind gemeinsam mit der Zugspannungsvorrichtung auf einem Schwenkrahmen montiert, der um eine horizontale, in Maschinenlängsrichtung verlaufende Achse anhand eines Antriebes verschwenkbar ist. Durch die Kombination dieser Querverschwenkung mit der Höhenverstellung ist die Führungsrolle bzw. der über diese laufende Draht in der genauen, für den Zick-Zack-Verlauf der Oberleitung erforderlichen Verlegeposition positionierbar.

Eine weitere Maschine zur Oberleitungsinstallation ist in der EP 0 416 136 B1 beschrieben und dient zum gemeinsamen Verlegen von Fahrdraht und Tragseil, die von jeweils einer auf dem Maschinenrahmen gelagerten Trommel abgewickelt werden. Die Führungseinrichtung hat die Form eines höhenverstellbaren Auslegerkranes, der um eine vertikale Achse rotierbar auf dem Maschinenrahmen aufgestellt ist und an dessen freiem Ende die beiden Führungsrollen zur Führung des Fahrdrahtes bzw. Tragseiles angeordnet sind. Die gabelartige Halterung jeder Führungsrolle ist mit einem Tragarm beweglich verbunden, um eine individuelle Verdrehung der Führungsrollen um eine annähernd in Gleislängsrichtung verlaufende Achse im Zuge der erforderlichen seitlichen Verschwenkung des Kranes zu ermöglichen.

Gemäß US 4,213,596 ist es bekannt, die Drahttrommeln für Tragseil und/ oder Fahrdraht und die höhen- und seitenverstellbare(n) Führungseinrichtung(en) jeweils auf separaten, im Arbeitseinsatz zu einem Zugsverband gekuppelten Schienenfahrzeugen vorzusehen. Die Führungseinrichtung besteht dabei aus einer Rollenvorrichtung, über die der Draht geführt wird und die mittels eines Spindelantriebes querverstellbar auf einem höhenverstellbaren Tragrahmen angeordnet ist. Der Tragrahmen seinerseits ist auf einer Arbeitsplattform befestigt, die höhenverstellbar mit dem Schienenfahrzeug verbunden ist.

Eine andere, gemäß AT-B-398 737 bekannte Maschine ist mit zwei Drahttrommeln für Tragseil und Fahrdraht ausgestattet, denen jeweils eine eigene, unabhängige Führungseinrichtung zugeordnet ist. Letztere haben die Form von höhenverstellbaren Auslegerarmen, die seitenverschwenkbar auf dem Maschinenrahmen montiert sind und am freien Ende jeweils eine Vorrichtung zum Führen und Festklemmen des Drahtes aufweisen.

Die DE-A-20 12 248 schließlich beschreibt eine Maschine für die Oberleitungsmontage mit einer Führungseinrichtung, die je eine Führungsrolle für Fahrdraht und Tragseil beinhaltet. Diese beiden übereinander angeordneten Führungsrollen sind anhand einer auf dem Maschinenrahmen befestigten Vorrichtung sowohl in vertikaler als auch in horizontaler Richtung teleskopartig verstellbar ausgebildet.

Die Aufgabe der vorliegenden Erfindung besteht nun in der Schaffung einer Maschine der gattungsgemäßen Art, mit der unter verschiedensten Einsatzbedingungen ein ungehindertes, genaues Verlegen der Fahrleitung möglich ist.

Gemäß der Erfindung wird diese Aufgabe mit der eingangs beschriebenen Maschine durch die im Kennzeichen von Anspruch 1 angeführten Merkmale gelöst.

Diese erfindungsgemäße Ausbildung der Führungseinrichtung ermöglicht in vorteilhafter Weise eine weitere Querverstellung der Führungsrolle zusätzlich zur anhand des Schwenkantriebes ausgeführten maximalen Querverschwenkung. Dadurch wird der Verstellbereich der Führungseinrichtung in Gleisquerrichtung vergrößert und so eine noch genauere Positionierung des Fahrdrahtes begünstigt. Von besonderem Vorteil ist die Relativverstellung zwischen Führungsrolle und Tragmast aber bei der Verlegung des Tragseiles, dessen kontinuierliche Führung in Gleislängsrichtung sich aufgrund seiner Lage oberhalb des Auslegerarmes problematisch gestalten kann. Durch die erfindungsgemäße Ausbildung ist es nun möglich, mit dem Tragmast den Ausleger zur Vermeidung eines Zusammenstoßens ganz einfach zu umgehen und das Tragseil trotzdem durch Querverschiebung der Führungsrolle genau in der für die Montage erforderlichen Höhen- und insbesondere Querlage zu positionieren bzw. dort zu halten.

Weitere Vorteile ergeben sich aus den Unteransprüchen sowie aus den Zeichnungen.

Die Erfindung wird im folgenden anhand eines in den Zeichnungen dargestellten Ausführungsbeispieles näher erläutert.

Es zeigen:
Fig. 1 und 2 eine Seitenansicht bzw. eine Draufsicht auf eine Maschine zum Verlegen einer Oberleitung eines Gleises,
Fig. 3 eine vereinfachte Ansicht in Maschinenlängsrichtung gemäß der Schnittlinie III in Fig. 1,
Fig. 4 und 5 je eine Seitenansicht der erfindungsgemäß ausgebildeten Führungseinrichtung in Maschinenlängsrichtung bzw. -querrichtung, und
Fig. 6 eine Ansicht gemäß Schnittlinie VI in Fig. 4.

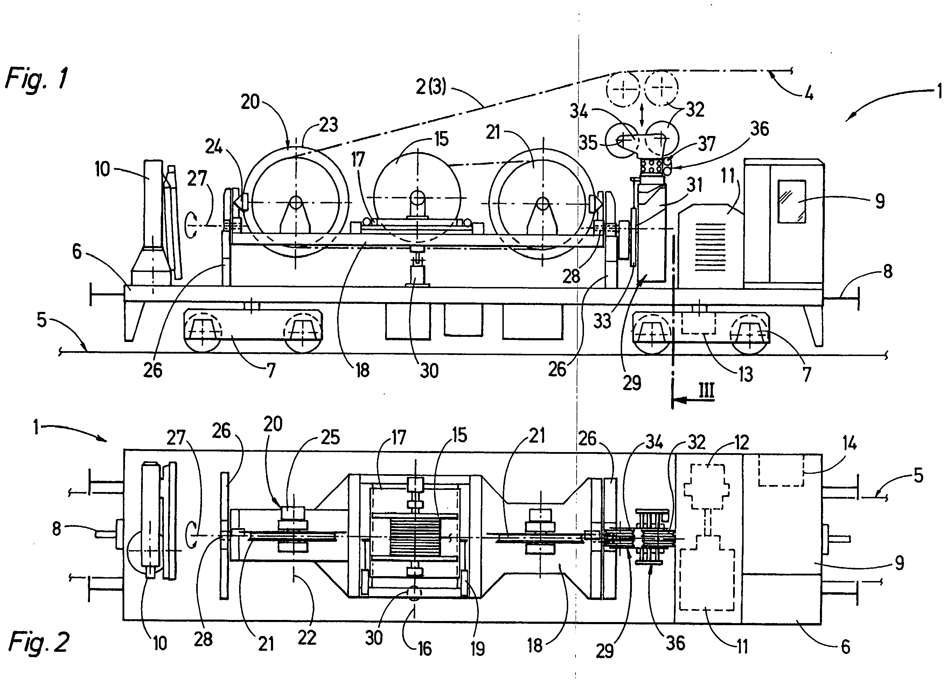

In Fig. 1 und 2 ist eine Maschine 1 zum Verlegen eines Fahrdrahtes 2 oder eines Tragseiles 3 einer Fahr- bzw. Oberleitung 4 eines Gleises 5 dargestellt. Die Maschine 1 weist einen Maschinenrahmen 6 auf, der über zwei Schienenfahrwerke 7 auf dem Gleis 5 abgestützt und endseitig jeweils mit einer Kupplung 8 zur Eingliederung in einen Zugsverband sowie mit einer Fahr- bzw. Arbeitskabine 9 und einem höhen- und seitenverschwenkbaren Kran 10 ausgestattet ist. Ein Motor 11 und ein Hydraulikaggregat 12 sind für die Energieversorgung eines Fahrantriebes 13 der Maschine 1 und aller weiteren, noch zu beschreibenden Antriebe vorgesehen, die anhand von Steuereinrichtungen 14 fernbedienbar sind.

Der zu verlegende Fahrdraht 2 bzw. das Tragseil 3 ist auf einer Drahttrommel 15 aufgewickelt, die um eine in Maschinenquerrichtung verlaufende, horizontale Rotationsachse 16 drehbar auf einem Schlitten 17 montiert ist. Dieser ist seinerseits auf einem Schwenkrahmen 18 gelagert und relativ zu diesem anhand von Antrieben 19 in Maschinenquerrichtung verschiebbar. Neben der Drahttrommel 15 ist auf dem Schwenkrahmen 18 eine Zugspannungsvorrichtung 20 vorgesehen, die aus zwei von der Drahttrommel 15 in Maschinenlängsrichtung distanzierten Umlenkrollen 21 gebildet ist. Diese sind um zur Rotationsachse 16 parallele Achsen 22 rotierbar und mit einer Bremsscheibe 23 und einer auf diese wirkenden Bremsvorrichtung 24 ausgestattet. Zur Aufrechterhaltung einer konstanten Zugspannung sind die Umlenkrollen 21 jeweils durch einen Hydromotor 25 beaufschlagbar.

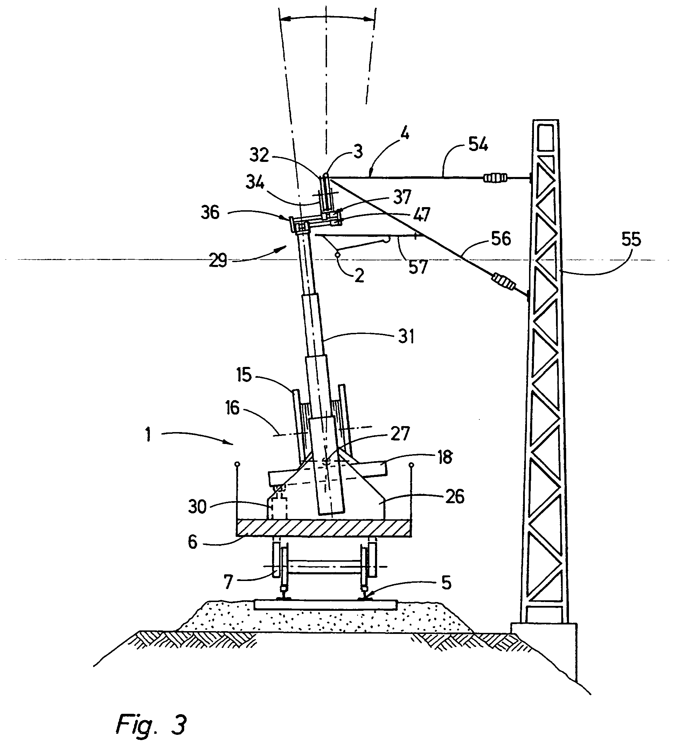

Wie im folgenden auch anhand der Fig. 3 deutlich wird, ist der Schwenkrahmen 18 im Bereich zwischen der Kabine 9 und dem Kran 10 mit dem Maschinenrahmen 6 über zwei Stützen 26 verbunden und auf diesen um eine in Maschinenlängsrichtung verlaufende, horizontale Achse 27 verschwenkbar gelagert. Die Achse 27 wird durch eine Welle 28 gebildet, die auf den Stützen 26 gelagert ist und auf der der Schwenkrahmen 18 nach Art einer Wiege pendelnd befestigt ist. Eine der beiden Wellen 28 kragt auf einer Seite über die Stütze 26 in Maschinenlängsrichtung vor und dient zur Lagerung einer mit der Welle 28 - und über diese mit dem Schwenkrahmen 18 - drehfest verbundenen Führungseinrichtung 29 für den Fahrdraht 2 bzw. das Tragseil 3. Zur Verschwenkung der Führungseinrichtung 29 gemeinsam mit dem mit dieser verbundenen Schwenkrahmen 18 um die Achse 27 ist ein Schwenkantrieb 30 vorgesehen, der am Schwenkrahmen 18 angelenkt und am Maschinenrahmen 6 befestigt ist.

Die Führungseinrichtung 29 besteht im wesentlichen aus einem anhand eines Antriebes 33 teleskopisch höhenverstellbaren Tragmast 31 und an dessen oberem Ende angeordneten Führungsrollen 32 zur Führung des von der Drahttrommel abgewickelten Fahrdrahtes 2 bzw. Tragseiles 3. Die insgesamt vier Führungsrollen 32 sind in einer Anordnung von zwei in Maschinenlängsrichtung hintereinander positionierten Paaren von jeweils zwei koaxial angeordneten Rollen auf einem Rollenbock 34 befestigt und um in Maschinenquerrichtung ausgerichtete Achsen 35 frei rotierbar, wobei die eine Achse 35 zur zweiten Achse 35 in vertikaler Richtung geringfügig versetzt ist. Der Rollenbock 34 ist seinerseits anhand einer Querverschiebevorrichtung 36 mit dem Tragmast 31 verbunden und relativ zu diesem mittels eines Querverstellantriebes 37 bzw. 47 in einer normal zur Längsrichtung des Tragmastes 31 und quer zur Maschinenlängsachse verlaufenden Richtung verstellbar ausgebildet.

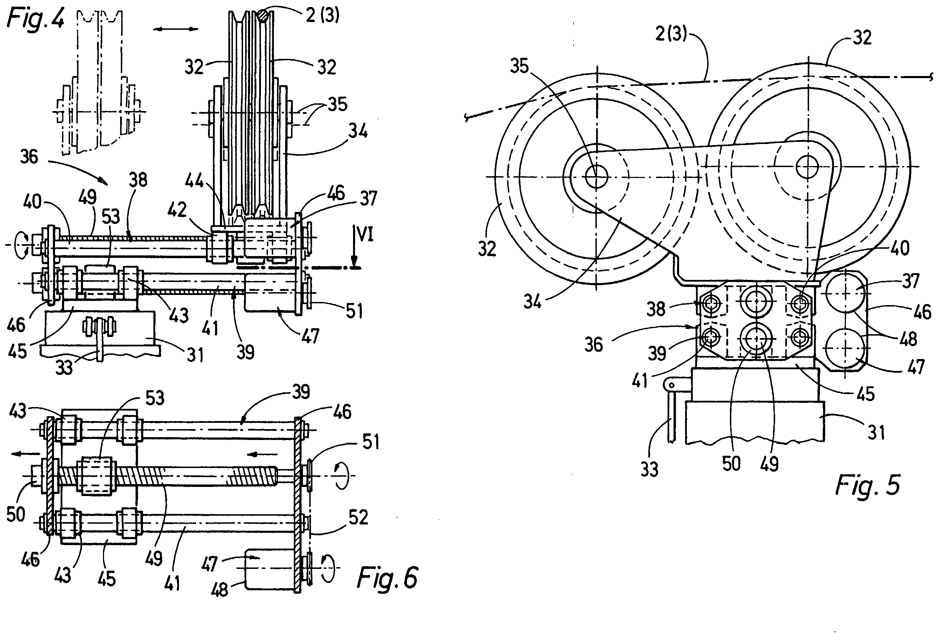

Wie nun aus den Fig. 4 bis 6 deutlich wird, setzt sich die Querverschiebevorrichtung 36 aus einer ersten und einer unterhalb dieser angeordneten, zweiten Querführung 38,39 zusammen, die jeweils zwei in Maschinenlängsrichtung voneinander distanzierte, in Maschinenquerrichtung verlaufende Querführungssäulen 40 bzw. 41 aufweisen. Auf diesen sind jeweils zwei Gleitbuchsen 42,43 querverschiebbar gelagert. Die insgesamt vier Gleitbuchsen 42 der oberen, ersten Querführung 38 sind dabei mit einer horizontalen Tragplatte 44 verbunden, auf der der Rollenbock 34 mit den Führungsrollen 32 montiert ist, während die Gleitbuchsen 43 der unteren, zweiten Querführung 39 auf einer Tragplatte 45 gelagert sind, die ihrerseits am oberen Ende des Tragmastes 31 befestigt ist. Die Querführungssäulen 40 der ersten Querführung 38 sind in vertikaler Richtung von den Querführungssäulen 41 der zweiten Querführung 39 distanziert, wobei die in Maschinenquerrichtung voneinander distanzierten Enden der vier Querführungssäulen 40 und 41 jeweils auf einer gemeinsamen, vertikal angeordneten Platte 46 montiert und so - unter Bildung einer konstruktiven Einheit - in ihrer Position relativ zueinander fixiert sind.

Jeder der beiden Querführungen 38 und 39 ist ein eigener Querverstellantrieb 37 bzw. 47 zugeordnet, der jeweils als mittels eines Hydromotors 48 rotierbare Spindel 49 ausgebildet ist. Diese verläuft jeweils parallel zu den Querführungssäulen 40,41 und ist zwischen diesen angeordnet sowie auf den vertikalen Platten 46 in je einem Wellenlager 50 drehbar montiert. Die beiden Hydrornotoren 48 sind ebenfalls auf einer der Ptatten 46 befestigt und stehen mit der jeweils zugeordneten Spindel 49 bzw. mit einem auf dieser drehfest angeordneten Antriebsritzel 51 über eine Antriebskette 52 in Verbindung. Jede Spindel 49 ist mit einer Spindelmutter 53 versehen, von welchen die eine mit der Tragplatte 44 des Rollenbocks 34 und die andere mit der unteren Tragplatte 45 fix verbunden ist. Eine Beaufschlagung des Querverstellantriebes 37 bewirkt somit eine Querverstellung lediglich des Rollenbocks 34 auf den Querführungssäulen 40 der ersten Querführung 38 (siehe strichpunktiert gezeigte Stellung in Fig. 4), während eine Beaufschlagung des Querverstellantriebes 47 der zweiten Querführung 39 eine Querverschiebung der gesamten, aus den beiden Querführungen 38 und 39 und dem Rollenbock 34 gebildeten Einheit relativ zum Tragmast 31 zur Folge hat (siehe kleine Pfeile in Fig. 6). Die mittlere Stellung ist in Fig. 2 zu sehen.

Im - in Fig. 3 dargestellten - Arbeitseinsatz der Maschine 1 werden die Führungsrollen 32 der Führungseinrichtung 29 anhand des Antriebes 33 so weit vertikal verschoben, bis sich der in die Nut der jeweiligen Rolle eingelegte Fahrdraht 2 bzw. das Tragseil 3 in der korrekten Höhenlage für die Endmontage an einem Ausleger 54 eines Fahrleitungsmastes 55 befindet (siehe auch strichpunktiert gezeigte Stellung der Führungsrollen 32 in Fig. 1). Unter kontinuierlicher Vorfahrt der Maschine 1 wird nun der von der Zugspannungsvorrichtung 20 permanent unter der vorgewählten, endgültigen Verlegespannung gehaltene Fahrdraht 2 bzw. das Tragseil 3 verlegt.

Soll beispielsweise ein Tragseil 3 auf einem Auslegerrohr 56 montiert werden, so stellt dabei ein an diesem befestigter Fahrdraht-Seitenhalter 57 ein Hindernis für den Tragmast 31 dar. Um dieses zu umgehen, wird der Schwenkrahmen 18 zusammen mit dem drehfest damit verbundenen, die Führungseinrichtung 29 lagernden Tragmast 31 anhand des Schwenkantriebes 30 um die Achse 27 so weit wie erforderlich seitlich ausgeschwenkt. Zur gewünschten Rückpositionierung des Tragseiles 3 in Gleismitte wird nun der Rollenbock 34 mit den Führungsrollen 32 anhand der Querverschiebevorrichtung 36 in der der Verschwenkrichtung entgegengesetzten Richtung verschoben. Zu diesem Zweck werden, je nach Notwendigkeit, die Querverstellantriebe 37 und/oder 47 beaufschlagt, um entweder nur den Rollenbock 34 auf der ersten Querführung 38 zu verstellen oder die gesamte, aus erster und zweiter Querführung 38,39 gebildete Einheit gegenüber dem Tragmast 31 in Maschinenquerichtung zu verschieben, bis das Tragseil 3 in der gewünsch ten Lage geführt werden kann.

Beim Installieren des (tiefer gelegenen) Fahrdrahtes 2 ist der Einsatz der Querverschiebevorrichtung 36 normalerweise nicht erforderlich, sondern es wird zur Herstellung des vorgeschriebenen Zick-Zack-Verlaufes des Fahrdrahtes 2 lediglich der Schwenkrahmen 18 mitsamt dem Tragmast 31 anhand des Schwenkantriebes 30 um die Achse 27 hin- und hergeschwenkt.

## Patentansprüche

1. Maschine zum Verlegen eines Fahrdrahtes (2) und/oder eines Tragseiles (3) einer Oberleitung (4) eines Gleises (5), mit einem auf Schienenfahrwerken (7) abgestützten Maschinenrahmen (6), auf dem eine - aufgewickelten Fahrdraht (2) bzw. Tragseil (3) beinhaltende - Drahttrommel (15) und eine Führungseinrichtung (29) mit einer an einem oberen Ende eines Tragmastes (31) angeordneten, über einen Antrieb (33) höhenverstellbaren Führungsrolle (32) zur Führung des von der Drahttrommel (15) abgewickelten Fahrdrahtes (2) bzw. Tragseiles (3) gelagert sind, wobei die Führungseinrichtung (29) anhand eines Schwenkantriebes (30) um eine in Maschinenlängsrichtung verlaufende Achse (27) verschwenkbar gelagert ist, **dadurch gekennzeichnet, daß** die Führungsrolle (32) auf einem mit dem Tragmast (31) verbundenen Rollenbock (34) befestigt ist, der anhand einer einen Querverstellantrieb (37,47) aufweisenden Querverschiebevorrichtung (36) in einer normal zur Längsrichtung des Tragmastes (31) und quer zur Maschinenlängsachse verlaufenden Richtung relativ zum Tragmast (31) verstellbar ausgebildet ist.

2. Maschine nach Anspruch 1, **dadurch gekennzeichnet, daß** die Querverschiebevorrichtung (36) aus einer ersten und einer zweiten Querführung (38,39) besteht, wobei die erste Querführung (38) am Rollenbock (34) und die zweite Querführung (39) am Tragmast (31) verschiebbar gelagert ist.

3. Maschine nach Anspruch 2, **dadurch gekennzeichnet, daß** der ersten und zweiten Querführung (38,39) jeweils ein eigener Querverstellantrieb (37,47) zugeordnet ist.

4. Maschine nach Anspruch 2 oder 3, **dadurch gekennzeichnet, daß** die erste und zweite Querführung (38,39) jeweils zwei in Maschinenlängsrichtung voneinander distanzierte, in Maschinenquerrichtung verlaufende Querführungssäulen (40,41) aufweisen.

5. Maschine nach Anspruch 4, **dadurch gekennzeichnet, daß** die Querführungssäulen (40) der ersten Querführung (38) in vertikaler Richtung von den Querführungssäulen (41) der zweiten Querführung (39) distanziert sind.

6. Maschine nach Anspruch 4 oder 5, **dadurch gekennzeichnet, daß** die Querverstellantriebe (37,47) jeweils zwischen den beiden Querführungssäulen (40,41) der zugeordneten Querführung (38,39) angeordnet sind.

7. Maschine nach einem der Ansprüche 4 bis 6, **dadurch gekennzeichnet, daß** die Querverstellantriebe (37,47) jeweils als mittels eines Hydromotors (48) rotierbare, parallel zu den Querführungssäulen (40,41) verlaufende Spindel (49) ausgebildet sind.

8. Maschine nach Anspruch 7, **dadurch gekennzeichnet, daß** der Hydromotor (48) über eine Antriebskette (52) mit einem Antriebsritzel (51) der Spindel (49) verbunden ist.

9. Maschine nach einem der Ansprüche 2 bis 8, **dadurch gekennzeichnet, daß** der Rollenbock (34) zwei Paare von jeweils zwei koaxial angeordneten Führungsrollen (32) aufweist.

## Claims

1. A machine for installing a contact wire (2) and/or a carrying cable (3) of an overhead line (4) of a track (5), including a machine frame (6) which is supported on on-track undercarriages (7) and on which are mounted a wire drum (15) - containing rolled-up contact wire (2) or carrying cable (3) - and a guiding device (29) having a guide roller (32), vertically adjustable by means of a drive (33) and arranged at an upper end of a supporting mast (31), for guiding the contact wire (2) or carrying cable (3) unwound from the wire drum (15), wherein the guiding device (29) is mounted for pivoting by means of a pivot drive (30) about an axis (27) extending in the longitudinal direction of the machine, **characterized in that** the guide roller (32) is fastened to a roller bracket (34), connected to the supporting mast (31), which is designed for adjustment relative to the supporting mast (31) in a direction extending perpendicularly to the longitudinal direction of the supporting mast (31) and transversely to the longitudinal axis of the machine by means of a transverse displacement device (36) comprising a transverse adjustment drive (37, 47).

2. A machine according to claim 1, **characterized in that** the transverse displacement device (36) is composed of a first and a second transverse guide (38, 39), wherein the first transverse guide (38) is displaceably mounted to the roller bracket (34) and the second transverse guide (39) is displaceably mounted to the supporting mast (31).

3. A machine according to claim 2, **characterized in that** a separate transverse adjustment drive (37, 47) is associated with the first and second transverse guide (38, 39), respectively.

4. A machine according to claim 2 or 3, **characterized in that** the first and second transverse guides (38, 39) each comprise two transverse guide posts (40, 41) spaced from one another in the longitudinal direction of the machine and extending in the transverse direction of the machine.

5. A machine according to claim 4, **characterized in that** the transverse guide posts (40) of the first transverse guide (38) are spaced in the vertical direction from the transverse guide posts (41) of the second transverse guide (39).

6. A machine according to claim 4 or 5, **characterized in that** the transverse adjustment drives (37, 47) are in each case arranged between the two transverse guide posts (40, 41) of the associated transverse guide (38, 39).

7. A machine according to one of claims 4 to 6, **characterized in that** each of the transverse adjustment drives (37, 38) is designed as a spindle (49) which extends parallel to the transverse guide posts (40, 41) and is rotatable by means of a hydraulic motor (48).

8. A machine according to claim 7, **characterized in that** the hydraulic motor (48) is connected via a drive chain (52) to a driving pinion (51) of the spindle (49).

9. A machine according to one of claims 2 to 8, **characterized in that** the roller bracket (34) comprises two pairs of two guide rollers (32) arranged coaxially in each case.

## Revendications

1. Machine pour la pose d'un fil de contact (2) et/ou d'un câble porteur (3) d'un fil aérien (4) d'une voie ferrée (5), avec un châssis de machine (6) appuyé sur des mécanismes de roulement ferroviaires (7) sur lequel un tambour de fil (15) contenant du fil de contact (2) ou câble porteur (3) enroulé et un dispositif de guidage (29) avec un galet de guidage (32) disposé à une extrémité supérieure d'un mât porteur (31), réglable en hauteur par le biais d'un entraînement (33), pour le guidage du fil de contact (2) ou câble porteur (3) déroulé du tambour de fil (15) sont logés, dans laquelle le dispositif de guidage (29) est logé à pivotement à l'aide d'un entraînement pivotant (30) autour d'un axe (27) s'étendant dans la direction longitudinale de machine, **caractérisée en ce que** le galet de guidage (32) est fixé sur un chevalet à galets (34) relié au mât porteur (31) qui est réalisé de manière à pouvoir être déplacé à l'aide d'un dispositif de coulissement transversal (36) présentant un entraînement de déplacement transversal (37, 47) dans une direction s'étendant perpendiculairement à la direction longitudinale du mât porteur (31) et transversalement à l'axe longitudinal de machine par rapport au mât porteur (31).

2. Machine selon la revendication 1, **caractérisée en ce que** le dispositif de coulissement transversal (36) se compose d'un premier et d'un second guide transversal (38, 39), dans laquelle le premier guide transversal (38) est logé de manière coulissante sur le chevalet à galets (34) et le second guide transversal (39) sur le mât porteur (31).

3. Machine selon la revendication 2, **caractérisée en ce qu'**un entraînement de déplacement transversal propre (37, 47) est à chaque fois associé au premier et second guide transversal (38, 39).

4. Machine selon la revendication 2 ou 3, **caractérisée en ce que** les premier et second guides transversaux (38, 39) présentent chacun deux colonnes de guidage transversal (40, 41) écartées l'une de l'autre dans la direction longitudinale de machine, s'étendant dans la direction transversale de machine.

5. Machine selon la revendication 4, **caractérisée en ce que** les colonnes de guidage transversal (40) du premier guide transversal (38) sont écartées en direction verticale des colonnes de guidage transversal (41) du second guide transversal (39).

6. Machine selon la revendication 4 ou 5, **caractérisée en ce que** les entraînements de déplacement transversal (37, 47) sont chacun disposés entre les deux colonnes de guidage transversal (40, 41) du guide transversal associé (38, 39).

7. Machine selon une des revendications 4 à 6, **caractérisée en ce que** les entraînements de déplacement transversal (37, 47) sont chacun réalisés en tant que broche (49) pouvant tourner au moyen d'un hydromoteur (48), s'étendant parallèlement aux colonnes de guidage transversal (40, 41).

8. Machine selon la revendication 7, **caractérisée en ce que** l'hydromoteur (48) est relié par le biais d'une chaîne d'entraînement (52) à un pignon d'entraînement (51) de la broche (49).

9. Machine selon une des revendications 2 à 8, **caractérisée en ce que** le chevalet à galets (34) présente deux paires d'à chaque fois deux galets de guidage (32) disposés de manière coaxiale.
